# FASCICULE DE BREVET EUROPEEN

(11) **EP 0 717 328 B1**
(45) Date de publication et mention de la délivrance du brevet: **02.06.1999**
(21) Numéro de dépôt: 95119185.7
(22) Date de dépôt: 06.12.1995
(51) Int. Cl.: G04B 37/22, G04B 39/00, C04B 35/581, C04B 35/505

(54) **Elément de fermeture transparent et inrayable d'une boîte de montre et boîte de montre munie d'un tel élément**
Durchsichtiger und verschleissfester Verschlussteil eines Uhrengehäuses und ein mit diesem Teil versehenes Uhrengehäuse
Wear resistant transparent closing member of a watch case and watch case provided with the same

(30) Priorité: 16.12.1994 CH 3808/94
(43) Date de publication de la demande: 19.06.1996
(73) Titulaire: Montres Rado S.A., 2543 Lengnau b. Biel (CH)
(72) Inventeur: Bach, Michael, CH-2505 Bienne (CH)
(74) Mandataire: Thérond, Gérard Raymond

(56) Documents cités:
- EP-A- 0 206 780
- EP-A- 0 370 824
- CH-A- 632 374
- DE-A- 3 335 414
- FR-A- 2 512 003
- FR-A- 2 556 711
- DATABASE WPI Week 9420 Derwent Publications Ltd., London, GB; AN 94-163773 & JP-A-06 107 456 (KYOCERA CORP)
- DATABASE WPI Week 9137 Derwent Publications Ltd., London, GB; AN 91-270246 & JP-A-03 177 360 (SUMITOMO ELEC IND KK)
- PATENT ABSTRACTS OF JAPAN vol. 8 no. 257 (P-316) ,24 Novembre 1984 & JP-A-59 126983 (GUROORII K.K.) 21 Juillet 1984,

## Description

La présente invention concerne un élément de fermeture transparent et inrayable d'une boîte de montre, et en particulier un verre de montre ou un fond ayant un faible prix de revient indépendamment de la complexité de sa forme, par exemple plane ou sphérique, et ayant une dureté Vickers supérieure ou égale à 1100.

La présente invention concerne également une boîte de montre munie d'un tel élément.

Les éléments de fermeture transparents de boîtes de montres et notamment les verres pour la protection des cadrans et des aiguilles ou analogues, et les fonds transparents pour la protection des mouvements, sont réalisés le plus souvent soit en matière synthétique, soit en verre minéral en raison de leur prix de revient relativement faible. La dureté respective de ces catégories de matériaux détermine bien entendu la résistance aux rayures des verres. Pour fixer les idées, des éléments de fermeture transparents réalisés en matériaux synthétiques tel que le Plexiglas présentent une dureté Vickers d'environ 100 et le verre minéral ou naturel présente une dureté Vickers d'environ 900. Or l'expérience a montré que les verres réalisés dans ces deux catégories de matériaux résistent mal aux rayures par certains agents très durs tels que la silice contenue dans des poussières, le marbre ou encore le sable présent constamment dans notre environnement, même si le verre minéral résiste mieux à ces agressions que les matériaux synthétiques. Il en résulte donc une altération par rayures relativement rapide de l'aspect esthétique de ces types de verres ou fonds de montres.

Pour éviter ces inconvénients on a utilisé le saphir ou corindon artificiel pour fabriquer des verres de montres et des fonds transparents, la dureté de cette matière s'approchant de celle du diamant. Ces éléments de fermeture transparents en saphir résistent très bien aux agressions des agents extérieurs mais présentent toutefois l'inconvénient majeur d'être longs, complexes et laborieux à fabriquer et d'avoir un prix de revient très élevé ce qui limite considérablement leur utilisation à très grande échelle. A titre d'illustration, 80% du coût de la seule fabrication des "poires" de saphir à partir desquelles sont découpées les plaques qui après de nombreuses opérations d'usinage ultérieures formeront ces éléments de fermeture transparents de boîtes de montres, est pris par les besoins en énergie électrique de la fabrication de ces poires. En outre, une usine de taille moyenne de fabrication de "poires" de saphir consomme annuellement autant d'électricité qu'une ville d'environ 50'000 habitants.

On comprend donc aisément, compte tenu des préoccupations actuelles grandissantes en matière d'économie d'énergie, la nécessité de trouver une solution alternative, notamment plus économique, à l'utilisation du saphir artificiel pour réaliser des éléments de fermeture transparents de boîtes de montres ayant une grande résistance aux rayures et destinés à une large gamme de montres.

Par ailleurs, la réalisation principalement lors de l'usinage du produit fini à partir de ces "poires" conduit à des pertes en matière première importantes.

La titulaire s'est aperçue au cours de l'étude de nouvelles solutions que l'application de l'oxynitrure d'aluminium fritté à la constitution d'éléments de fermeture transparents tels que des verres de montres est particulièrement intéressante car les verres ainsi réalisés remplissent parfaitement les exigences requises pour la réalisation d'éléments de fermeture transparents de boîtes de montres inrayables tant du point de vue économique que du point de vue de leurs propriétés de mise en oeuvre, de leurs propriétés mécaniques et de leur transparence.

La présente invention a donc précisément pour objet un élément de fermeture transparent et inrayable de boîte de montre, tel que défini à la revendication 1 du brevet.

Par conséquent, la fabrication compliquée et coûteuse du saphir artificiel ainsi que sa transformation laborieuse et également coûteuse en éléments de fermeture transparents de boîtes de montres tels que des verres et/ou des fonds sont remplacées par une simple opération de mise en forme quasi finale de l'élément désiré, par exemple dans un moule, suivie d'une opération de frittage et d'une opération de polissage.

On remarquera que de façon avantageuse la production de ces éléments de fermeture à l'aide de ces matériaux s'effectue sans pertes de matière importante, ce qui conduit à une diminution du coût global de production de ces éléments

En effet, la qualité des éléments de fermeture réalisés par frittage de mélange de poudres comprenant essentiellement de l'oxynitrure d'aluminium, est si bonne qu'il n'est nécessaire de procéder à aucun usinage de reprise pour obtenir la forme finale dudit élément de fermeture et que seule une opération de polissage diamant finale suffit.

A titre d'exemple, un verre de montre plat peut être directement obtenu par pressage axial avec des tolérances dimensionnelles de l'ordre de +/- 0,5%.

Un autre avantage important du choix des ces matériaux pour la fabrication d'éléments de fermeture de boîtes de montres est que, contrairement au saphir artificiel, ils sont polycristallins et présentent de ce fait des propriétés isotropes. Si l'on envisageait de fritter de la poudre de saphir, la pièce obtenue ne serait pas transparente en raison de l'anisotropie des propriétés optiques relatives des grains de saphir. Un tel problème n'existe pas avec les matériaux isotropes suscités.

A noter que ces matériaux n'ont aucun caractère allergène.

La présente invention a également pour objet une boîte de montre comprenant une carrure caractérisée en ce qu'elle comporte en outre un élément de fermeture formé d'un verre ou d'un fond conforme à celui défini par la revendication 1.

Selon un autre de ses aspects, la présente invention a également pour objet une montre bracelet comprenant une boîte de montre tel que décrite ci-dessus et un bracelet à maillons articulés, ladite montre étant caractérisée en ce que chaque maillon est fritté et est réalisé en oxynitrure d'aluminium ayant le composition Al_{23-1/x}O₂₇₊ₓN₅₋ₓ, x étant compris entre 0,429 et 2 et en ce que ledit maillon est transparent dans le spectre visible.

D'autres caractéristiques et avantages de la présente invention apparaîtront plus clairement à la lecture de la description suivante d'exemples de réalisation particuliers; ladite description étant faite à titre non limitatif et en relation avec les dessins joints parmi lesquels :
- les figures 1 et 2 représentent une montre munie d'un élément de fermeture transparent et inrayable selon l'invention, en l'occurrence un verre, respectivement en plan et en coupe selon la ligne II-II,
- la figure 3 représente une vue partielle de profil et en coupe d'une montre munie d'un élément de fermeture transparent et inrayable selon l'invention en l'occurrence un verre-carrure, et
- la figure 4 représente une montre munie de deux éléments de fermeture transparents et inrayables selon l'invention, en l'occurrence un verre et un fond, en perspective éclatée.

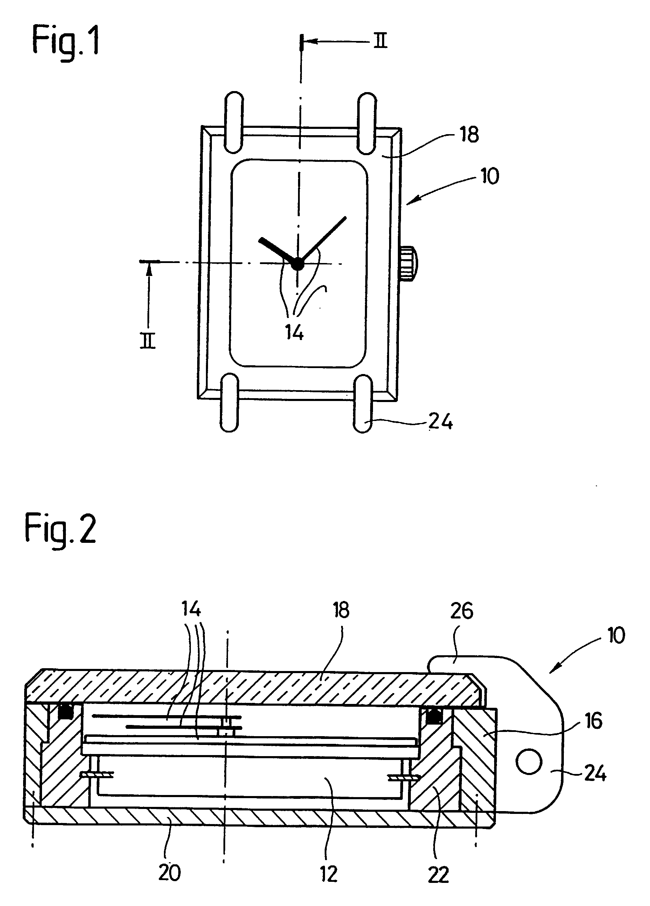

La montre représentée aux figures 1 et 2 comporte une boîte 10, un mouvement 12 et des moyens d'affichage 14, en l'occurrence des aiguilles et un cadran. La boîte 10 comprend une carrure 16, un premier et un deuxième élément de fermeture de la boîte, respectivement un verre 18 et un fond 20, ainsi qu'un cercle d'encageage 22. La carrure 16 est munie de quatre cornes 24 qui se prolongent au dessus du corps de la carrure et forment des griffes 26 définissant avec le corps de la carrure une glissière à l'intérieur de laquelle le verre 18 est logé. Le fond 20 est fixé à la carrure 16 au moyen de vis non représentées au dessin. Il s'appuie en outre contre le cercle d'encageage 22. Ce dernier s'étend sur toute la hauteur de la carrure 16 et il est en appui contre le verre 18. Ainsi, lorsque le fond 20 est fixé au moyen de vis, le cercle d'encageage 22 exerce une pression sur le verre 18 qui s'appuie sur les griffes 26. Cette construction est bien connue de l'homme du métier, aussi il est inutile de la décrire de manière plus explicite.

Selon l'invention, l'élément de fermeture transparent que forme le verre 18 est un élément pratiquement inrayable réalisé par frittage d'une pièce brute ayant une forme générale semblable à celle du verre. La pièce brute est formée essentiellement à partir d'une poudre ou d'un mélange de poudres de matériau céramique, et le cas échéant, d'un liant, qui une fois frittée et polie présente des caractéristiques de transparence dans le spectre visible.

Plus précisément, la poudre ou le mélange de poudres comprend essentiellement de l'oxynitrure d'aluminium. Le verre ainsi réalisé est bien entendu complètement transparent dans le spectre visible après frittage et protège ainsi les moyens d'affichage tout en permettant leur lecture. En tous cas, le coefficient d'absorption de la lumière dans le spectre visible ne dépasse pas 30% après frittage et polissage.

La montre munie d'un élément de fermeture transparent selon l'invention, dans l'exemple décrit le verre 18, est de la sorte particulièrement bien protégée contre les agressions extérieures.

Pour réaliser un élément de fermeture telle que le verre 18 décrit plus haut, les procédés de fabrication décrits respectivement dans la demande de brevet FR 2'556'711 et le brevet US 4'761'390 sont mis en oeuvre selon que l'on utilise comme matériau de départ un mélange de poudres de matériau céramique comprenant essentiellement de l'oxynitrure d'aluminium. A noter que les brevets cités plus haut sont incorporés ici par référence.

Le mélange de poudres comprenant essentiellement l'oxynitrure d'aluminium peut comprendre bien entendu le cas échéant un certain nombre d'éléments d'addition en faible quantité pour obtenir des pièces avec des propriétés spécifiques. Ces éléments d'addition et leur effets sont bien connus des hommes du métier.

A titre indicatif, la dureté d'un élément de fermeture ayant la composition Al_{23-1/x}O₂₇₊ₓN₅₋ₓ, x étant compris entre 0,429 et 2 est supérieure à 1100 vickers, et proche de celle du saphir. Les mesures effectuées ont donné des résultats de dureté de l'ordre de 1'850 HV. Par ailleurs son coefficient d'absorption de la lumière dans le spectre visible est environ de 15% pour une épaisseur d'environ 2,6mm.

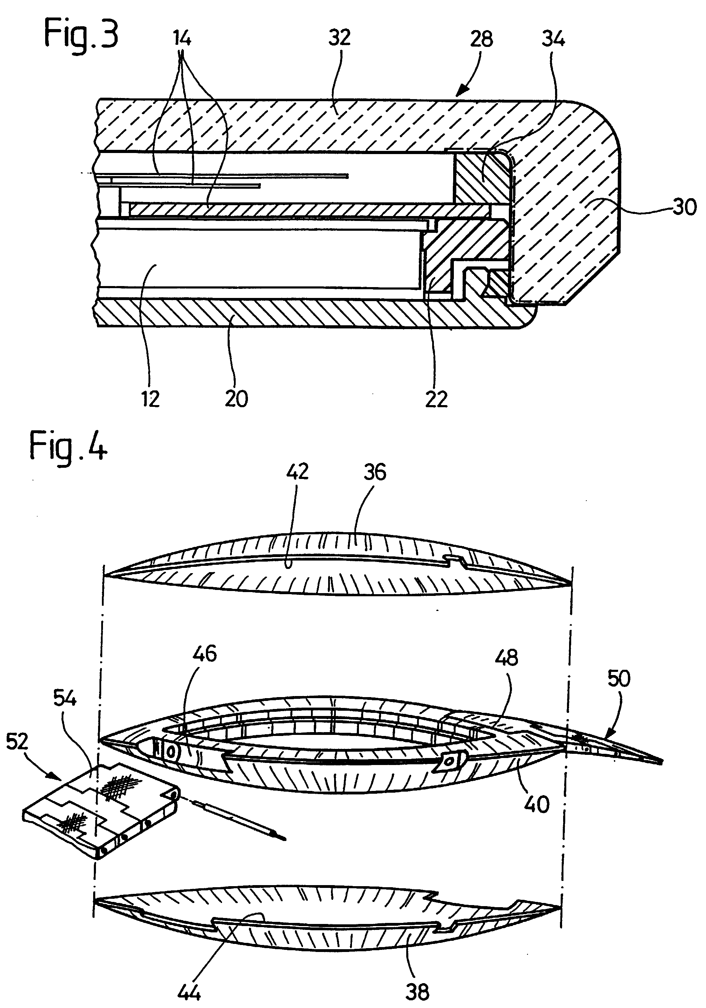

En se référant maintenant à la figure 3 on voit une autre montre qui est munie d'un élément de fermeture de boîte selon l'invention et dans laquelle les éléments identiques à ceux des figures 1 et 2 portent les mêmes références numériques.

On distingue sur la figure 3 un ensemble carrure-verre 28 de forme ronde constituant l'élément de fermeture transparent de la boîte de montre. Cet ensemble carrure-verre 28 comporte un bord 30 relativement épais et une plaque centrale 32 plus mince. Selon l'invention, cet ensemble carrure-verre 28 est également réalisé comme dans l'exemple précédemment décrit par frittage d'une pièce brute ayant la forme générale semblable à celle de l'ensemble carrure-verre, la pièce brute étant formée essentiellement d'une poudre ou d'un mélange de poudres comprenant essentiellement de l'oxynitrure d'aluminium. Bien entendu, les procédés mis en oeuvre pour obtenir l'ensemble carrure-verre sont les mêmes que ceux décrits dans les brevets mentionnés plus haut.

L'ensemble carrure-verre 28 forme ainsi une seule et même pièce homogène transparente et inrayable. Le bord 30 joue le même rôle que la carrure dans une boîte de montre conventionnelle, alors que la plaque centrale 32 remplit la même fonction que le verre. Si on le désire, la surface intérieure du bord 30 peut être revêtue d'une couche de masquage 34 (représentée en traits mixtes au dessin) sous la forme d'une métallisation ou analogue pour dissimuler les éléments se trouvant à l'intérieur de la boîte comme par exemple le cercle d'encageage 22 et le rehaut 34. Cette couche de métallisation peut bien entendu présenter une couleur quelconque. Selon une variante non représentée, la surface extérieure de ce bord 30 peut être traitée de manière appropriée afin de donner à la boîte un aspect particulier.

Cet exemple illustre bien l'avantage des éléments de fermeture transparents et inrayables selon l'invention qui peuvent être obtenus directement par frittage dans des formes définitives complexes. La réalisation d'un tel élément de fermeture transparent et inrayable par les techniques conventionnelles, en saphir artificiel usiné, serait en effet d'un coût prohibitif.

Sur la figure 4, on voit un autre exemple d'application d'éléments de fermeture transparents et inrayables de boîte de montre selon l'invention.

Dans cet exemple, la boîte de montre comporte une coquille supérieure 36 en forme de calotte sphérique, dont au moins une partie est transparente et qui forme un premier élément de fermeture de boîte de montre selon l'invention.

La boîte comporte encore une coquille inférieure 38, également en forme de calotte sphérique, et une carrure 40 disposée dans le voisinage de la périphérie des coquilles 36 et 38, la coquille inférieure 38 formant un deuxième élément de fermeture de boîte de montre selon l'invention. Comme on le voit à la figure 4, les coquilles 36 et 38 définissent un espace intérieur dans lequel prend place un mouvement (non représenté) et la carrure 40 est arrangée pour épouser respectivement la forme des faces inférieure et supérieure que présentent respectivement les coquilles supérieure 36 et inférieure 38 pour leur servir de surface d'appui. Ainsi, lorsque la boîte est assemblée, les bords 42 et 44 des coquilles supérieure et inférieure sont jointifs sur toute leur périphérie à l'exception des endroits 46 et 48 prévus pour l'attache des brins de bracelet 50 et 52, et la carrure n'apparaît plus.

Selon un mode de réalisation particulier, les brins de bracelets 50 et 52 peuvent être formés de maillons 54 articulés réalisés également par frittage d'une pièce brute de forme générale semblable à celle du maillon désiré, ladite pièce brute étant formée essentiellement d'une poudre ou d'un mélange de poudres comprenant essentiellement de l'oxynitrure d'aluminium, le matériau fritté obtenu étant transparent dans le spectre visible et ayant un coefficient d'absorption dans le spectre visible ne dépassant pas 30% après frittage et polissage.

Ici la coquille supérieure 36, soit le verre, et la coquille inférieure 38, soit le fond, formant les éléments de fermeture transparents inrayables sont réalisés comme le verre décrit en liaison avec les figures 1 et 2.

Comme les bords des coquilles sont jointifs, la boîte ainsi réalisée est complètement inrayable. De plus, grâce à la forme en calotte sphérique des éléments de fermeture selon l'invention - normalement très coûteux lorsqu'ils sont réalisés en saphir artificiel - la boîte ainsi obtenue présente des caractéristiques d'absorption des chocs qu'elle peut subir élevées car les chocs sont transmis à l'assise des coquilles située sur la carrure sur laquelle elles sont fixées (effet de voûte).

Il est bien entendu que là encore les deux coquilles peuvent comporter à la périphérie de leur face intérieure une couche de masquage telle qu'une métallisation pour cacher certains éléments de la boîte comme la carrure.

Bien que la présente invention ait été décrite en relation avec des exemples de réalisation particuliers, il est clair, cependant, qu'elle n'est pas limitée auxdits exemples et qu'elle est susceptible de nombreuses variantes et modifications sans sortir de son cadre.

## Revendications

1. Elément de fermeture transparent et inrayable de boîte de montre, caractérisé en ce qu'il est un élément de fermeture fritté en oxynitrure d'aluminium ayant la composition Al_{23-1/x}O₂₇₊ₓN₅₋ₓ, x étant compris entre 0,429 et 2 et en ce que ledit élément de fermeture est transparent dans le spectre visible.

2. Elément de fermeture selon la revendication 1, caractérisé en ce qu'il constitue le verre ou le fond d'une boîte de montre.

3. Boîte de montre comprenant une carrure, caractérisée en ce qu'elle comporte un élément de fermeture conforme à celui défini à la revendication 2.

4. Boîte de montre selon la revendication 3, caractérisée en ce que l'élément de fermeture comprend le verre et au moins une partie de la carrure.

5. Montre bracelet comprenant une boîte de montre selon l'une des revendications 3 ou 4, comprenant un bracelet à maillons articulés, caractérisée en ce que chaque maillon est fritté et est réalisé en oxynitrure d'aluminium ayant la composition Al_{23-1/x}O₂₇₊ₓN₅₋ₓ, x étant compris entre 0,429 et 2 et en ce que ledit maillon est transparent dans le spectre visible.

## Claims

1. Transparent scratchproof watch case closure element, characterized in that it is a sintered closure element made of aluminium oxynitride having the composition Al_{23-1/x}O₂₇₊ₓN₅₋ₓ , X being comprised between 0.429 and 2 and in that said closure element is transparent in the visible spectrum.

2. Closure element according to claim 1, characterized in that it forms the watch glass or back cover of a watch case.

3. Watch case including a middle part, characterized in that it includes a closure element in conformity with the closure element defined in claim 2.

4. Watch case according to claim 3, characterized in that the closure element includes the watch glass and at least one part of the middle part.

5. Wrist watch comprising a watch case according to one of claims 3 or 4, comprising an articulated link bracelet, characterized in that each link is sintered links and is made of aluminium oxynitride having the composition Al_{23-1/x}O₂₇₊ₓN₅₋ₓ, X being comprised between 0.429 and 2 and in that said link is transparent in the visible spectrum.

## Patentansprüche

1. Lichtdurchlässiges und kratzfestes Verschlußelement für Uhrengehäuse, dadurch gekennzeichnet, daß es ein Verschlußelement ist, das unter Oxinitrierung von Aluminium geschmolzen wird und die Zusammensetzung Al_{23-1/x}O₂₇₊ₓN₅₋ₓ besitzt, wobei x zwischen 0,429 und 2 liegt, und daß das Verschlußelement im sichtbaren Spektrum lichtdurchlässig ist.

2. Verschlußelement nach Anspruch 1, dadurch gekennzeichnet, daß es das Glas oder den Boden eines Uhrengehäuses bildet.

3. Uhrengehäuse mit einer Einfassung, dadurch gekennzeichnet, daß es ein Verschlußelement nach Anspruch 2 enthält.

4. Uhrengehäuse nach Anspruch 3, dadurch gekennzeichnet, daß das Verschlußelement das Glas und wenigstens einen Teil der Einfassung enthält.

5. Armbanduhr mit einem Uhrengehäuse nach einem der Ansprüche 3 oder 4, mit einem Gliederarmband, dadurch gekennzeichnet, daß jedes Glied geschmolzen und unter Oxinitrierung von Aluminium mit der Zusammensetzung Al_{23-1/x}O₂₇₊ₓN₅₋ₓ hergestellt wird, wobei x zwischen 0,429 und 2 liegt und daß das Glied im sichtbaren Spektrum lichtdurchlässig ist.
